## Europäisches Patentamt
## European Patent Office
## Office européen des brevets

(11) Veröffentlichungsnummer: **0 235 390**
**B1**

# EUROPÄISCHE PATENTSCHRIFT

(45) Veröffentlichungstag der Patentschrift:
**15.03.89**

(21) Anmeldenummer: **86117869.7**

(22) Anmeldetag: **22.12.86**

(51) Int. Cl.⁴: **F02B 37/00**, F02B 63/04,
F02B 73/00

(54) Schiffsdieselmotorenanlage.

(30) Priorität: **27.02.86  CH 793/86**

(43) Veröffentlichungstag der Anmeldung:
**09.09.87 Patentblatt 87/37**

(45) Bekanntmachung des Hinweises auf die Patenterteilung:
**15.03.89 Patentblatt 89/11**

(84) Benannte Vertragsstaaten:
**CH DE FR GB LI**

(56) Entgegenhaltungen:
**DE-C- 941 235**

**HANSA-SCHIFFAHRT-SCHIFFBAU-HAFEN, 122.
Jahrgang, Nr. 22, 1985, Seiten 2304-2310, DE; A.
STREULI: "Anwendung der BBC-Nutzturbinen"**

(73) Patentinhaber: **BBC Brown Boveri AG, Haselstrasse,
CH-5401 Baden(CH)**

(72) Erfinder: **Ammann, Hansrudolf, Reiherweg 3,
CH-5036 Oberentfelden(CH)**
Erfinder: **Egger, Hans Jörg, Bachweidstrasse 18,
CH-9011 St.Gallen(CH)**
Erfinder: **Streuli, Adrian, Bodenacherstrasse 5,
CH-5116 Schinznach-Bad(CH)**

**Beschreibung**

Die Erfindung betrifft eine Schiffsdieselmotorenanlage
– mit einem Hauptdieselmotor (2), der mindestens einen Abgasturbolader und eine separate, zur Laderturbine parallel geschaltete, leistungsabgebende Nutzturbine umfaßt,
– und mit mindestens einem durch einen weiteren Abgasturbolader aufgeladenen Hilfsdieselmotor, welcher einen das Bordnetz mit elektrischer Energie beliefernden Synchrongenerator antreibt,
– wobei die Nutzturbine an ein freies Wellenende der Hilfsdiesel/Generator-Einheit gekuppelt ist.

Ein aufgeladener Schiffsdieselmotor dieser Art, d.h., bei welchem die Nutzturbine an ein freies Wellenende der Hilfsdiesel/Generator-Einheit angekuppelt ist, ist beschrieben in der Zeitschrift "HANSA-Schiffahrt-Schiffbau-Hafen", 122. Jahrgang – 1985, Nr. 22, Seiten 2304 bis 2310. Diese Lösung, als Gesamtverbundsystem bezeichnet, weist den Vorteil auf, dass der Strombedarf auf einfachste, preiswerte und sichere Art gedeckt werden kann.

Nun ist jedoch bei tiefer Last eines turbo-aufgeladenen Dieselmotors die Druckdifferenz über dem Motor, d.h. die Differenz zwischen den Drücken in Auspuffsammelleitung und in Luftreceiver, sehr gering. Sie kann sogar zum Teil negativ werden. Da in des Kolbenmotoren immer eine gewisse Ventilüberschneidung haben, d.h. Phasen, in denen die Einlassventile und die Auslassventile gleichzeitig offen sind, kann es bei negativer Druckdifferenz über dem Motor zum Rückströmen von Verbrennungsgasen in die Einlasskanäle kommen. Besonders im Schwerölbetrieb, bei dem die Verbrennungsgase viele Schmutzpartikel enthalten, können die Einlasskanäle stark verschmutzen.

Der Erfindung liegt deshalb die Aufgabe zugrunde, bei einer Schiffsanlage der eingangs genannten Art dafür zu sorgen, dass die Druckdifferenz über den Hilfsdieselmotor bis zu den tiefsten Lasten immer positiv ist.

Erfindungsgemäss wird dies dadurch erreicht, dass ein kleiner Teil der Abgase des Hauptdieselmotors in das Abgassystem stromaufwärts der Laderturbine des Turboladers des Hilfsdieselmotors eingeleitet wird.

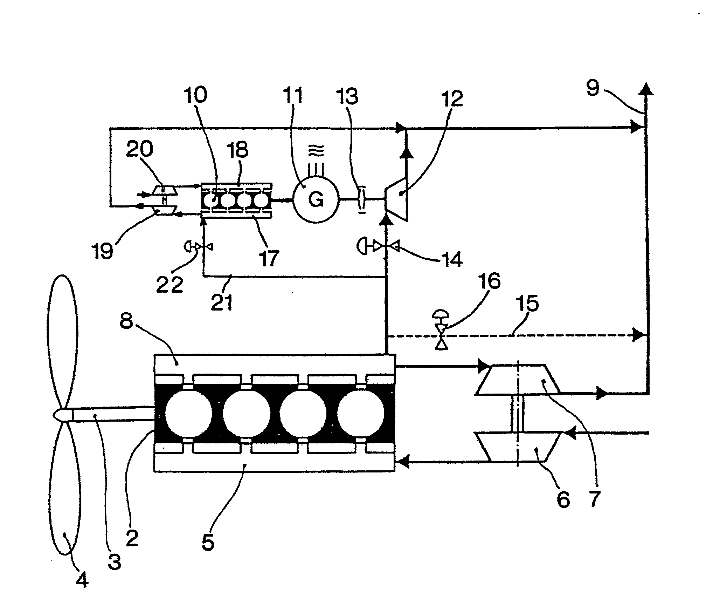

In der Zeichnung ist ein Ausführungsbeispiel der Erfindung schematisch dargestellt. Darin ist die Strömungsrichtung der Arbeitsmedien mit Pfeilen bezeichnet.

Die stark vereinfachte Schiffsanlage, in der erfindungsunwesentliche Elemente wie beispielsweise der Rumpf fortgelassen sind, zeigt einen mehrzylindrigen Schiffsdieselmotor, nachstehend mit Hauptdiesel 2 bezeichnet. Ueber eine Welle 3 wird der Festpropeller 4 direkt angetrieben. Der aufgeladene Motor erhält Druckluft aus dem Luftreceiver 5, in dem die Luft durch den Verdichter 6 eines Abgasturboladers gefördert wird. Den Verdichterantrieb besorgt die Laderturbine 7, die mit den Abgasen aus der Sammelauspuffleitung 8 des Hauptdiesels 2 beaufschlagt ist. Nach der Entspannung werden die Abgase über den Auspuff 9 und ein Kamin in die Atmosphäre verworfen.

Zur Bereitstellung der elektrischen Bordleistung ist ein mehrzylindriger Hilfsdiesel 10 vorgesehen, der einen Synchrongenerator 11 antreibt. Hierzu ist der Hilfsdiesel drehzahlgeregelt, beispielsweise auf 1200 Umdrehungen pro Minute. Auch dieser Hilfsdiesel ist mittels eines Abgasturboladers aufgeladen. Die Druckluft erhält er aus dem Luftreceiver 18, in den sie vom Verdichter 20 des Turboladers gefördert wurde. Der Verdichter 20 ist an eine Laderturbine 19 gekuppelt, die von den Abgasen aus dem Auspuffgefäss 17 angetrieben wird. Nach der Energieabgabe werden die Abgase verworfen.

Die überschüssige Abgasenergie aus dem Hauptdiesel 2 wird einer Nutzturbine 12 zugeführt. Strömungsmässig ist diese Nutzturbine parallel zur Laderturbine 7 geschaltet, d.h. sie wird ebenfalls mit heissen Abgasen aus der Sammelauspuffleitung 8 beaufschlagt.

Wie der Hilfsdiesel 10 wird nun auch diese Nutzturbine 12 zur Erzeugung von elektrischer Energie herangezogen. Hierzu wird sie an ein freies Wellenende der Funktionseinheit Hilfsdiesel/Synchrongenerator gekuppelt. Im vorliegenden Beispiel geschieht dies über eine Freilaufkupplung 13 an der Generatorseite. Es versteht sich, dass das Ankuppeln genausogut motorseitig vorgenommen werden könnte.

Die Nutzturbine ist über eine Abgasklappe 14 abschaltbar. Diese Möglichkeit, die Nutzturbine ausser Betrieb zu setzen, ist von besonderer Bedeutung bei Abgasturboladern, deren Laderturbine 7 für Teillast ausgelegt ist. Diese Teillastauslegung geschieht in der Weise, dass der Druck in der Sammelauspuffleitung 8 erhöht wird. Bei Zweitaktmotoren und gespülten Viertaktmotoren kann dies bis zu einem Wert geschehen, bei dem eine ausreichende Spülung noch gewährleistet ist; dies kann fast bis in den Bereich des Ladedruckes hinreichen. Ein erhöhter Druck in der Sammelabgasleitung 8 wird dadurch erreicht, dass der von den Abgasen beaufschlagte Turbinenquerschnitt von 100% (bei Vollastauslegung) auf 80% reduziert wird. Dieser erhöhte Druck hat nun zur Folge, dass ein grösserer Teil der potentiellen Abgasenergie ausgenutzt werden kann, da auch die Drosselverluste vom Zylinder zum Sammelbehälter hin reduziert sind. Um den erwähnten Ladedruck zu erzielen, d.h. um die erforderliche Verdichterleistung zu erbringen, benötigt die Laderturbine 7 nicht mehr das vorhandene Energieangebot. Der nichtbenötigte Teil wird in der Nutzturbine 12 verarbeitet.

In einem solchen Fall kann bei der gezeigten Parallelschaltung der Nutzturbine die gesamte zu beaufschlagende Turbinenfläche folgendermassen unterteilt sein: 70% der Fläche entfallen auf die Laderturbine 7, 10% auf die Nutzturbine 12.

Mit dieser Massnahme ist bei Vollast des Hauptdiesels 2 trotz unwesentlicher Reduktion der Leistungsdichte, d.h. des mittleren spezifischen Druckes um 1 bis 2% bereits eine Verbrauchsverbesserung, d.h. eine Brennstofferparnis von ca. 3% erzielbar. Dabei werden sowohl die thermischen als auch die mechanischen Belastungen des Hauptdiesels gegenüber einer Vollastauslegung (100% Turbinenfläche) nicht ungünstiger.

Die genannte Abschaltung der Nutzturbine bei Teillast führt nun gegenüber dem konventionellen 100%-Fall zu einer Verkleinerung der Turbinenfläche um 30%, gegenüber einer nicht abschaltbaren Nutzturbine zu einer Verkleinerung von ca. 10%. Dies bewirkt eine nochmalige Steigerung des Druckes in der Sammelabgasleitung 8 und als Folge hiervon eine beträchtliche Anhebung des Ladedruckes im Luftreceiver 5. Als Ergebnis wird im Teillastbereich der spezifische Brennstoffverbrauch demnach nochmals verbessert.

Für den Fall, dass die Nutzturbine aus anderem Anlass ausser Betrieb gesetzt wird, d.h., die Abgasklappe 14 geschlossen wird, ist zwischen der Zuströmleitung zur Nutzturbine und dem Auspuff 9 eine Abblaseleitung 15 mit einer Notklappe 16 angeordnet. Deren engster Querschnitt ist entsprechend der Turbinenfläche der Nutzturbinen 12 zu bemessen. Hierdurch wird gewährleistet, dass auch im Notbetrieb die Laderturbine 7 nur jene Gasmenge verarbeiten muss, für die sie ausgelegt ist.

Bei der Nutzturbine 12 handelt es sich um eine relativ kleine, schnelldrehende Turbine. Die beispielsweise 23'000 Umdrehungen pro Minute müssen deshalb über ein Getriebe auf die erforderlichen 1200 Umdrehungen pro Minute entsprechend 60 Hz reduziert werden. Zur Schmierung von Nutzturbine 12 und Getriebe kann der Schmierkreislauf des Hilfsdiesels 10 herangezogen werden.

Anhand eines realistischen Zahlenbeispiels sei die Erfindung erläutert. Es versteht sich, dass nur Approximativwerte angegeben werden, da allzu zahlreiche motorspezifische und laderspezifische Parameter die Aussagekraft von Absolutwerten verwässern würden:

Es handle sich um eine Einmotorenanlage in einem Containerschiff mit direktem Propellerantrieb. Der zur Anwendung gelangende Zweitakt-Grossdiesel weise mit 12 Zylindern eine Antriebsleistung von ca. 35'000 kW auf.

Der Bedarf an elektrischer Energie eines solchen Schiffes beträgt durchschnittlich 1200 kW. Die das Bordnetz speisende Hilfsanlage besteht aus drei mit jeweils einem 1600 kW Generator gekuppelten Hilfsdieselmotoren. Hiervon ist ein Hilfsdiesel im Leistungsbetrieb, um die jeweilige Bedarfslast zu decken, ein zweiter Hilfsdiesel läuft im Leerlauf und der dritte Hilfsdiesel ist als Reserve vorgesehen.

Zur Bereitstellung der Ladeluft sind drei Abgasturbolader vorgesehen. Bei einem Druck von ca. 3,2 bar im Luftreceiver ist eine isentrope Verdichterleistung von 8000 kW erforderlich. Bei einem Verdichterwirkungsgrad von 85% liegen an den drei Turboladerwellen ca. 9500 kW an.

Die bei heutigen Wirkungsgraden erzielbare Leistung aus den Abgasen beträgt jedoch ca. 10'500 kW bei einem Druck von 3,0 bar. Das Ueberangebot an Abgasenergie wird in der Nutzturbine verwertet, so dass von deren Welle rund 1000 kW an die Funktionseinheit Hilfsdiesel/Generator abgegeben werden kann.

Von den benötigten 1200 kW Bordleistung muss der Hilfsmotor demnach nur noch 200 kW erzeugen. Der Hilfsdieselmotor läuft demnach hauptsächlich bei relativ tiefer Last. Dadurch entsteht eine erhöhte Gefahr der Verschmutzung seiner Einlasskanäle.

Um hier Abhilfe zu schaffen, wird ein kleiner Teil der Abgase aus der Sammelauspuffleitung 8 des Hauptdiesels 2 in das Abgassystem des Hilfsdiesels 10 gefördert. Beim gezeigten Beispiel zweigt hierzu von der Zuströmleitung zur Nutzturbine eine weitere Zuströmleitung 21 ab, die in das Auspuffgefäss 17 mündet. Mit dieser Massnahme kann das Spülgefälle des Hilfsdiesels 10 erheblich vergrössert werden. Wird beispielsweise ca. 1% der Abgasmenge des Hauptdiesels der Laderturbine 19 des Hilfsdiesels zugeführt, so kann dadurch der Ladedruck des Hilfsdiesels um ca. 20% gesteigert werden, was in jedem Fall zum gewünschten, positiven Spülgefälle führt.

Selbstverständlich kann die Abgasmenge, die der Laderturbine 19 zuzuführen ist, abhängig von der Druckdifferenz über den Hilfsdiesel 10 gesteuert werden. In diesem Fall wird man mit Vorteil ein entsprechend zu betätigendes Regelorgan 22 in die Zuströmleitung 21 anordnen.

## Patentansprüche

1. Schiffsdieselmotorenanlage
– mit einem Hauptdieselmotor (2), der mindestens einen Abgasturbolader (6, 7) und eine separate, zur Laderturbine (7) parallelgeschaltete, leistungsabgebende Nutzturbine (12) umfaßt,
– und mit mindestens einem durch einen weiteren Abgasturbolader (19, 20) aufgeladenen Hilfsdieselmotor (10), welcher einen das Bordnetz mit elektrischer Energie beliefernden Synchrongenerator (11) antreibt,
– wobei die Nutzturbine (12) an ein freies Wellenende der Hilfsdiesel/Generator-Einheit (10, 11) gekuppelt ist,
dadurch gekennzeichnet, dass ein kleiner Teil der Abgase des Hauptdieselmotors (2) in das Abgassystem stromaufwärts der Laderturbine (19) des Turboladers (19, 20) des Hilfsdieselmotors (10) eingeleitet wird.

2. Dieselmotor nach Anspruch 1, dadurch gekennzeichnet, dass der Abgasteil in das Auspuffgefäss (17) des Hilfsdieselmotors (10) eingeführt wird.

3. Aufgeladener Schiffsdieselmotor nach Anspruch 1, dadurch gekennzeichnet, dass der Abgasteil in Funktion der Druckdifferenz über dem Hilfsdieselmotor (10) gesteuert ist, wozu in der Zuströmleitung (21) ein Regelorgan (22) angeordnet ist.

## Claims

1. Marine diesel engine installation
– having a main diesel engine (2) which comprises at least one exhaust-gas turbocharger (6, 7) and a separate utility turbine (12) which is connected in parallel with the supercharging turbine (7) and delivers power,
– and having at least one auxiliary diesel engine (10) which is supercharged by a further exhaust-gas turbocharger (19, 20) which drives a synchronous generator (11) supplying the ship's electrical system with electrical energy,
— with the utility turbine (12) being coupled to a free shaft end of the auxiliary diesel/generator unit (10, 11),
characterized in that a small portion of the exhaust gases of the main diesel engine (2) is fed into the exhaust-gas system on the outlet side of the supercharging turbine (19) of the turbocharger (19, 20) of the auxiliary diesel engine (10).

2. Diesel engine according to Claim 1, characterized in that the exhaust-gas portion is fed into the exhaust-gas vessel (17) of the auxiliary diesel engine (10).

3. Supercharged marine diesel engine according to Claim 1, characterized in that the exhaust-gas portion is controlled as a function of the pressure difference across the auxiliary diesel engine (10), for which purpose a control member (22) is arranged in the feed line (21).

**Revendications**

1. Installation de moteur diesel marin
— avec un moteur diesel principal (2), qui comprend au moins un turbocompresseur de suralimentation à gaz d'échappement (6, 7) et une turbine d'utilisation (12) distincte, fournissant de la puissance et montée en parallèle sur la turbine (7) du turbocompresseur,
— et avec au moins un moteur diesel auxiliaire (10) suralimenté par un autre turbocompresseur de suralimentation à gaz d'échappement (19, 20), lequel moteur entraîne un générateur synchrone (11) alimentant en énergie électrique le réseau de bord,
— la turbine d'utilisation (12) étant couplée à un bout d'arbre libre de l'unité diesel auxiliaire/générateur, caractérisée en ce qu'une petite partie des gaz d'échappement du moteur diesel principal (2) sont introduits dans le circuit des gaz d'échappement en amont de la turbine (19) du turbocompresseur (19, 20) du moteur diesel auxiliaire (10).

2. Moteur diesel suivant la revendication 1, caractérisé en ce que la partie des gaz d'échappement est introduite dans le pot d'échappement (17) du moteur diesel auxiliaire (10).

3. Moteur diesel marin suralimenté suivant la revendication 1, caractérisé en ce que la partie des gaz d'échappement est régulée en fonction de la différence de pression de part et d'autre du moteur diesel auxiliaire (10), un organe de régulation (22) étant à cet effet disposé dans la conduite d'alimentation (21).